(19) **Europäisches Patentamt / European Patent Office / Office européen des brevets**

(11) **EP 1 590 700 B1**

(12) **FASCICULE DE BREVET EUROPEEN**

(45) Date de publication et mention
de la délivrance du brevet:
**06.11.2013 Bulletin 2013/45**

(21) Numéro de dépôt: **04706709.5**

(22) Date de dépôt: **30.01.2004**

(51) Int Cl.:
***G02C 7/02*** *(2006.01)*   ***G02C 7/06*** *(2006.01)*

(86) Numéro de dépôt international:
**PCT/FR2004/000210**

(87) Numéro de publication internationale:
**WO 2004/070426 (19.08.2004 Gazette 2004/34)**

(54) **LENTILLE OPHTALMIQUE A ADDITION PROGRESSIVE DE PUISSANCE ET DE PRISME**

SICHTKORREKTIVE LINSE MIT PROGRESSIVER ADDITION UND PROGRESSIVER PRISMENSTÄRKE

OPHTHALMIC LENS WITH PROGRESSIVE ADDITION OF POWER AND PRISM

(84) Etats contractants désignés:
**AT BE BG CH CY CZ DE DK EE ES FI FR GB GR HU IE IT LI LU MC NL PT RO SE SI SK TR**

(30) Priorité: **03.02.2003 FR 0301185**

(43) Date de publication de la demande:
**02.11.2005 Bulletin 2005/44**

(73) Titulaire: **ESSILOR INTERNATIONAL (Compagnie Générale d'Optique)**
**F-94220 Charenton-le-Pont (FR)**

(72) Inventeurs:
• **POULAIN, Isabelle**
  **F-94100 Saint-Maur des Fosses (FR)**
• **DROBE, Björn**
  **94227 Charenton (FR)**
• **HARO, Clotilde**
  **F-94000 Creteil (FR)**
• **ALLIONE, Pascal**
  **94227 Charenton (FR)**
• **AHSBAHS, Françoise**
  **F-94100 Saint Maur des Fosses (FR)**

(74) Mandataire: **Chauvin, Vincent et al**
**Coralis**
**14/16, rue Ballu**
**75009 Paris (FR)**

(56) Documents cités:
| FR-A1- 2 683 643 | US-A- 2 118 132 |
| US-A- 2 442 849 | US-A- 5 270 745 |
| US-B1- 6 364 481 | US-B1- 6 505 934 |

## Description

La présente invention concerne de manière générale le domaine des équipements visuels visant à corriger ou prévenir les troubles de la réfraction de l'oeil. Elle a plus précisément pour objet une lentille ophtalmique multifocale à addition progressive de puissance et de prisme, du type verre de lunettes (i.e. conçue pour exercer son pouvoir correcteur à distance de l'oeil). Elle a également pour objet l'application d'une telle lentille à l'équipement visuel soit des sujets presbytes, soit des sujets myopes ou emmétropes (en particulier les enfants).

Pour les sujets presbytes, la lentille selon l'invention vise à compenser une éventuelle hétérophorie s'ajoutant à la presbytie. L'hétérophorie consiste en une déviation des deux axes visuels par rapport au point de fixation considéré, maintenue latente en l'absence d'un stimulus de fusion approprié. Par conséquent, pour cette distance particulière de fixation, les positions actives et passives ne coïncident pas. En fonction de la direction relative de la déviation, on décrit différentes formes d'hétérophories : ésophorie (déviation en dedans des axes visuels des yeux) et exophorie (déviation en dehors des axes visuels des yeux). (source : « Le Nouveau Dictionnaire de la Vision », Michel Millodot, Mediacom Vision 1997, Bures sur Yvette, p.72). La plupart des individus présentent une hétérophorie plus ou moins importante. Pour compenser cette divergence ou convergence des lignes de regard, le sujet doit converger ou diverger davantage. Selon le sujet et son état de fatigue ou son âge, cet effort supplémentaire de convergence peut provoquer de l'inconfort visuel, notamment en vision de près. Si la compensation est insuffisant ou trop pénible, l'hétérophorie peut même s'avérer être un obstacle au port de verres progressifs.

Pour les sujets myopes ou emmétropes, il s'agit de permettre un contrôle de l'évolution de la myopie et notamment la prévention ou le ralentissement de la progression de la myopie des enfants. Le monde moderne pousse en effet une proportion croissante de la population à une vie sédentaire qui implique au niveau visuel une utilisation intensive de la vision de près, intermédiaire et centrale. Le travail en vision de près occupe donc une place prépondérante dans les activités journalières du système visuel de l'enfant et de l'adulte. Or, il semble que le travail en vision de près joue un rôle dans le développement de la myopie. Des études récentes confirment l'importance de ce facteur environnemental, particulièrement pour les enfants. Le niveau de scolarisation semble avoir une influence sur le pourcentage de myopes dans une population donnée, et le degré de myopie semble corrélé au nombre d'heures passées chaque jour en vision de près. Dans les pays occidentaux, la proportion de myopes serait comprise entre 15 et 20%. Cette proportion attendrait 50%, voire 70% dans les pays d'Asie comme la Chine et le Japon. Dans les pays d'Afrique, la proportion de myopes autres que congénitaux serait quasiment réduite à zéro.

Il a donc été avancé que la myopie acquise (par opposition à la myopie congénitale, présente à la naissance) serait liée au travail prolongé en vision de près, et que le niveau de myopie dépendrait du temps passé en vision de près. La myopie serait ainsi une adaptation du système visuel au travail en vision de près. Les optométristes ont donc proposé des solutions pour tenter de ralentir la progression de la myopie acquise. Une première solution consiste à prescrire au porteur une correction inférieure à la valeur de sa myopie en vision de loin, l'idée étant de réduire l'effort d'accommodation pour passer de la vision de loin à la vision de près. Cette méthode est contestée et n'a pas fait la preuve de son efficacité. Une autre solution consiste à prescrire au porteur une correction trop importante en vision de loin. De fait, l'amétropie des jeunes hypermétropes est plus stable dans le temps que celle des jeunes myopes, et l'idée était de rendre les jeunes myopes hypermétropes en leur prescrivant une correction trop importante. L'intérêt de cette méthode n'a pas non plus été démontré. D'autres spécialistes ont proposé un entraînement visuel : des expériences visuelles répétées, de la relaxation, ainsi que des exercices pour soulager la tension des yeux. L'effet de ces méthodes sur l'amétropie du sujet n'est pas avéré.

Enfin, des optométristes ont tenté de ralentir l'évolution de la myopie en prescrivant au sujet une addition de puissance sphérique en vision de près. Cette addition aurait pour effet de réduire l'effort d'accommodation en vision de près. Pour vérifier cette hypothèse, des études ont été menées sur la prescription de lentilles doubles foyers ou à addition progressive de puissance à des enfants myopes. Ces études, généralement incomplètes, ont fait apparaître des résultats mitigés sur l'évolution de la myopie : on constate une efficacité variable selon les porteurs testés, de sorte qu'aucune solution n'a pu être valablement proposée pour satisfaire au traitement systématique et efficace de l'ensemble ou d'au moins la majorité de la population myope enfantine.

Il existe donc le besoin d'une autre solution pour corriger efficacement et/ou ralentir la progression de la myopie.

Quel est, indépendamment de ces deux problèmes de presbyties et d'amétropie, l'état de la technique en matière de lentille ophtalmique correctrice multifocale à addition progressive de puissance ?

Ce type de lentille, dont un exemple est donné dans le document FR2683643, est définie par le préambule de la revendication 1.

Sur les verres multifocaux standards, pour un astigmatisme nominal faible (inférieur à 1 dioptrie), il existe une relation mathématique entre la puissance de réfringence sphérique et la puissance de réfringence prismatique horizontale au point de référence pour la vision de près. De fait, optiquement, la puissance de réfringence prismatique augmente avec la puissance de réfringence sphérique ; mais cette progression de puissance prismatique qui découle de la progression de puissance sphérique n'était jusqu'à ce jour pas maîtrisée, ni même prise en compte dans la conception des lentilles progressives. Or, cette progression naturelle et involontaire de la puissance prismatique ne répond pas dans tous les cas aux besoins physiologiques du porteur en vision de près, notamment quant à son degré d'hétérophorie, et reste en tout état de cause insuffisante pour de nombreux porteurs presbytes ainsi que pour la plupart des porteurs myopes, notamment les enfants, en raison des interactions entre accommodation et convergence.

La lentille multifocale selon l'invention remédie aux différents problèmes développés ci-dessus en intégrant une addition progressive et sensible de puissance de réfringence prismatique horizontale en supplément de celle résultant de la progression de puissance sphérique. Autrement dit, l'invention propose de fixer indépendamment l'une de l'autre la valeur de puissance prismatique horizontale et la valeur de la puissance sphérique en vision de près, de manière à renforcer le prisme en vision de près tout en préservant une continuité de puissance prismatique. Elle propose pour ce faire d'introduire une addition de puissance prismatique minimum sur la verticale passant par le point de référence pour la vision de loin.

L'invention propose ainsi, en premier lieu, une lentille ophtalmique correctrice à addition progressive de puissance, telle que définie par la revendication 1.

D'autres caractéristiques avantageuses de l'invention sont définies par les revendications 2 à 6.

Il est important en particulier de conserver une absence ou quasi-absence de prisme horizontal en vision de loin, afin d'éviter l'adaptation permanente du sujet au prisme. C'est pourquoi, selon l'invention, la puissance prismatique n'est pas uniformément renforcée, mais suit une progression sensible de prisme, depuis la zone de vision de loin où le prisme horizontal reste faible, voire nul ou quasi-nul (du moins en l'absence de correction prismatique prescrite), jusqu'à la zone de vision de près où il atteint une valeur prédéterminée, en fonction éventuellement des paramètres physiologiques du sujet.

Pour une coopération efficiente avec les valeurs de prisme horizontal et/ou d'addition de prisme horizontal définies ci-dessus, il est préférable de prévoir que la puissance nominale soit comprise entre +0.75 et -10 dioptries.

Pour son application aux sujets myopes ou emmétropes, l'invention a par ailleurs pour objet l'utilisation d'une lentille présentant une ou plusieurs des caractéristiques optiques définies ci-dessus pour la fabrication d'un équipement visuel pour myopes ou emmétropes et plus particulièrement encore pour enfants myopes.

L'invention peut être appliquée à une méthode de correction et/ou de prévention d'une amétropie, en particulier de la myopie, comprenant le port d'un équipement visuel comportant au moins une lentille ophtalmique correctrice à addition progressive de puissance, comportant une zone de vision de loin, une zone de vision de près et une zone de vision intermédiaire située entre les deux précédentes, ces trois zones étant traversées par une méridienne principale de progression le long de laquelle la puissance sphérique d'uné part et la puissance prismatique horizontale d'autre part varient toutes les deux progressivement.

La méthode sera avantageusement appliquée aux enfants myopes.

Lorsque le sujet myope à équiper présente une exophorie en vision de près, l'addition de prisme de la lentille est à base nasale. Inversement, lorsque le sujet myope à équiper présente une esophorie en vision de près, l'addition de prisme de la lentille est à base temporale.

Les résultats des études menées par la demanderesse sur la correction et le ralentissement de l'évolution de la myopie montrent que la prescription d'une addition de puissance seule n'est pas efficace pour tous les myopes. Plus précisément, il apparaît que, lors d'un travail en vision de près, les systèmes d'accommodation et de convergence sont tous deux fortement sollicités. Ainsi, dans son principe, l'invention propose-t-elle d'équilibrer à la fois, en combinaison, la demande d'accommodation et la demande de convergence en vision de près afin de prévenir une éventuelle apparition de la myopie ou du moins de réduire son évolution, voire de la stabiliser. L'équilibre entre l'accommodation et la convergence est en effet un point important qui a été négligé dans les études prescrivant seulement une addition en vision de près. Pourtant, par rapport à la convergence, l'accommodation est dans une moindre mesure responsable de l'augmentation de pression intraoculaire pouvant engendrer la prise de myopie lors d'un travail en vision de près. L'absence de prise en compte de l'équilibre entre l'accommodation et la convergence est un point qui peut expliquer l'inefficacité d'une simple addition en vision de près chez certains myopes. Par exemple, un sujet myope exophore en état de sous-convergence en vision de près portant une simple addition va effectivement mettre en jeu moins d'accommodation mais, de ce fait, devra fournir un montant de convergence fusionnelle (i.e. un effort de convergence) plus important. Il apparaît donc important d'agir aussi bien sur la convergence que sur l'accommodation en essayant de ne pas perturber l'équilibre existant entre ces deux systèmes.

Pour son application à la presbytie, la présente invention propose de réduire l'inconfort d'hétérophorie évoqué précédemment et d'augmenter l'acceptabilité des verres progressifs des porteurs presbytes par l'adjonction d'une progression de puissance prismatique horizontale significative. A cet effet, l'invention a plus précisément pour objet l'utilisation d'une lentille présentant une ou plusieurs des caractéristiques optiques définies ci-dessus pour la fabrication d'un équipement visuel pour un sujet presbyte, ainsi qu'une méthode de correction et/ou d'entraînement visuel d'un sujet presbyte, comprenant le port d'un équipement visuel comportant au moins une lentille ophtalmique présentant une ou plusieurs des caractéristiques optiques définies ci-dessus.

Pour la correction ("palliative") d'un sujet presbyte présentant une exophorie, respectivement une esophorie, en vision de près, l'addition de prisme de la lentille est à base nasale, respectivement à base temporale.

Au contraire, pour l'entraînement visuel ("curatif") d'un sujet presbyte présentant une exophorie, respectivement une esophorie, en vision de près, l'addition de prisme de la lentille est à base temporale, respectivement à base nasale.

D'autres caractéristiques et avantages de l'invention apparaîtront à la lecture de la description qui suit d'un mode de réalisation particulier, donnée à titre d'exemple non limitatif.

Il sera fait référence aux dessins présentés en annexe, parmi lesquels :

- la figure 1 est une vue de face d'une lentille ophtalmique à addition progressive de puissance, montrant schématiquement les différentes zones et points remarquables d'une telle lentille ;
- la figure 2 est un diagramme représentant, pour une lentille ophtalmique à addition progressive de puissance appartenant à l'état de la technique, les valeurs de prisme horizontal le long de la méridienne principale de progression ;
- la figure 3 est un diagramme représentant, pour la lentille ophtalmique de la figure 2, les valeurs de prisme horizontal le long de la verticale passant par le point de référence pour la vision de loin ;
- la figure 4 est un diagramme analogue à celui de la figure 2 représentant, pour une lentille ophtalmique à addition progressive de puissance selon l'invention, les valeurs de prisme horizontal le long de la méridienne principale de progression :
- la figure 5 est un diagramme représentant, pour la lentille ophtalmique de la figure 4, les valeurs de prisme horizontal le long de la verticale passant par le point de référence pour la vision de loin.

Dans le cadre de la présente description, on admettra les définitions suivantes.

On définit le pouvoir de correction optique d'une lentille ophtalmique correctrice par ses propriétés de réfringence sphérique, cylindrique et prismatique. On comprend qu'une telle définition optique revêt une portée plus générale qu'une définition purement surfacique : elle définit dans sa globalité l'effet de réfringence de la lentille sur un rayon lumineux incident, résultant de la somme algébrique de la réfringence opérée successivement sur les faces avant et arrière de la lentille. On comprend qu'une telle définition optique englobe une pluralité, voire une infinité, de combinaisons de paires de surfaces produisant le même effet de réfringence optique global, comme exposé dans le document « Theoritical aspects of concentric varifocal lenses » de W.N. CHARMAN, dans Ophtal. Physiol. Opt. Vol. 2 No. 1 pages 75-86, 1982, publié par Pergamon Press pour le British College of Ophtalmic Opticians.

Dans le cadre de la présente invention, les valeurs numériques des grandeurs optiques utilisées dans les définitions (puissances sphériques, cylindriques et prismatiques) sont obtenues par la méthode de mesure optique dite de frontofocométrie bien connue des opticiens et précisément décrite dans le document « Paraxial Optics » de W.F. Long, dans Visual Optics and Instrumentation, Ed. N. Charman, Macmillan Press, London 1991, pages 418-419, incorporé par référence à la présente demande.

La « puissance de réfringence sphérique » d'une lentille pour un rayon incident traversant cette lentille, également appelée puissance totale ou puissance réfringente ou puissance de focalisation ou puissance sphérique, est la grandeur qui caractérise et quantifie le premier effet de réfringence sphérique (effet « *loupe* ») de la lentille sur le rayon considéré : si elle est positive, la lentille a un effet convergent sur le rayon ; si elle est négative, l'effet sur le rayon est divergent.

La « puissance de réfringence cylindrique » d'une lentille pour un rayon incident traversant cette lentille est la grandeur qui caractérise et quantifie l'effet de réfringence cylindrique exercé par la lentille sur le rayon considéré, selon lequel il se forme non pas une seule mais deux aires focales, situées dans des plans différents, généralement perpendiculaires entre elles et appelées focales tangentielle et focale sagittale. Cette puissance cylindrique, également appelée « puissance d'astigmatisme » ou simplement « astigmatisme », correspond à la différence des puissances sphériques suivant les deux aires focales.

La « puissance de réfringence prismatique » d'une lentille pour un rayon incident traversant cette lentille est la grandeur qui caractérise et quantifie l'effet de réfringence prismatique, ou plus simplement de déviation, exercé par la lentille sur le rayon considéré. Cette puissance prismatique, également appelée « prisme », correspond à l'angle de déviation du rayon, c'est-à-dire l'angle formé entre les parties entrantes et sortantes du rayon. Le prisme se décompose en deux composantes : l'une horizontale, appelée prisme horizontal, correspondant à l'angle formé entre les projections des parties entrantes et sortantes du rayon dans le plan horizontal, l'autre verticale, appelée prisme vertical, correspondant à l'angle formé entre les projections des parties entrantes et sortantes du rayon dans le plan vertical. Dans cette définition, on considère un verre disposé dans sa configuration classique d'utilisation : axe optique à l'horizontale et cercles de montage définissant une droite horizontale. L'unité de mesure du prisme est la dioptrie prismatique qui correspond à une déviation du faisceau de 1 cm à une distance de 1 m (soit approximativement 0,57 degré).

Une lentille ophtalmique correctrice à addition progressive de puissance se définit notamment par deux grandeurs optiques principales :

- une « addition de puissance sphérique » $\Delta Pu$ égale

à la variation de puissance sphérique entre un point de référence L de la zone de vision de loin et un point de référence P de la zone de vision de près VP, ces deux points P et L étant situés sur la méridienne principale de progression MM',

- une « puissance nominale » Pn égale à la puissance audit point de référence L de la zone de vision de loin VL
- un astigmatisme nominal An égal à la puissance de réfringence cylindrique audit point de référence L de la zone de vision de loin VL.

Dans le cadre de la présente invention on a considéré, pour fixer les valeurs numériques de prisme, le cas le plus courant où l'astigmatisme nominal An est faible, c'est-à-dire inférieur à 1 dioptrie. On sait en effet que le prisme dépend dans une mesure non négligeable de l'astigmatisme, de telle sorte que lorsque l'astigmatisme augmente, le prisme augmente également. Ainsi, pour une lentille ayant un astigmatisme nominal supérieur à 1 dioptrie, il faudra envisager des valeurs de prisme supérieures à 2 dioptries prismatiques.

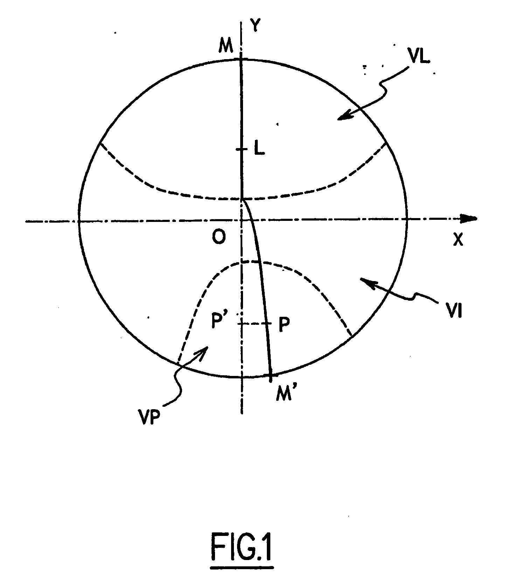

En référence à la figure 1, une lentille ophtalmique correctrice à addition progressive de puissance sphérique comprend classiquement une zone de vision de loin VL située dans sa partie supérieure, une zone de vision de près VP située dans sa partie inférieure et une zone de vision intermédiaire VI située entre ces deux zones.

On distingue également une méridienne principale de progression MM', représentée en trait gras, qui traverse ces trois zones VL, VI et VP suivant une direction globalement verticale, avec un point de référence de la vision de loin L et un point de référence de la vision de près P.

Dans la suite de la présente description, on utilise un système de coordonnées orthonormé représenté sur la figure 1. Sur cette figure, on a représenté en plan une lentille finie d'une forme circulaire, avant détourage, qui présente typiquement un diamètre de 60 mm. Un point de la lentille est utilisé par le laboratoire de prescription pour la référence de prisme ; il s'agit généralement, comme en l'espèce, du centre géométrique de la lentille, noté O sur la figure. Le point de référence prisme est habituellement matérialisé sur la lentille par une marque visible. Le point de référence prisme est utilisé par le laboratoire de prescription pour adapter la lentille au prisme prescrit au porteur par l'ophtalmologiste.

Dans le référentiel défini sur la figure 1, l'axe des abscisses X correspond à l'axe horizontal de la lentille et l'axe des ordonnées Y à l'axe vertical. Le point O de la figure 1 est le centre géométrique de la lentille. Dans cette définition, la verticale et l'horizontale correspondent à l'orientation de la lentille lors de son utilisation. Ainsi, dans les lentilles progressives de la demanderesse, l'axe vertical des ordonnées Y est défini par le centre O de la lentille (qui est aussi le point de référence prisme) et par la croix de montage, qui sont en pratique tous deux matérialisés sur la lentille.

Comme dans les lentilles commercialisées par la demanderesse, le point L de référence pour la vision de loin est situé 8 mm au-dessus du centre O de la lentille, tandis que le point P de référence pour la vision de près est situé 14 mm en dessous du centre O.

La méridienne principale de progression MM' se présente ici sous la forme d'une ligne brisée, dont la forme peut varier avantageusement en fonction de l'addition de puissance ∆Pu et de la puissance sphérique nominale au point de référence de la vision de loin L, comme décrit par la demanderesse dans le brevet US-A-5270745.

Un aspect.essentiel de la présente invention porte sur la progression du prisme le long de la méridienne principale, ou plus précisément, comme nous le verrons plus bas, le long de l'axe vertical Y. On introduit en effet une addition de prisme horizontal sur la verticale Y.

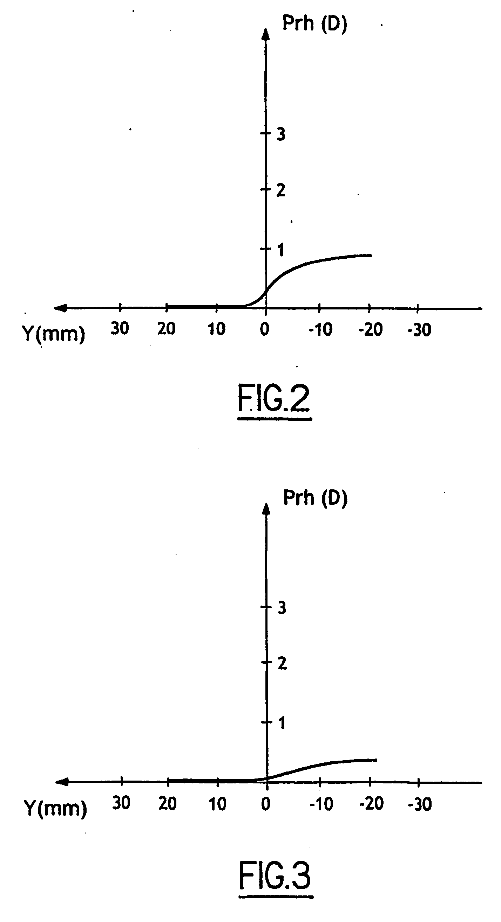

Aux figures 2 à 5, on a représenté, pour une lentille de l'état de la technique puis pour une lentille selon l'invention, les valeurs de prisme horizontal le long de la méridienne principale de progression et le long de l'axe vertical Y. Pour l'ensemble de ces figures, en abscisse figure l'ordonnée Y du point considéré de la lentille, exprimée en millimètre (mm), et en ordonnée figure la puissance prismatique horizontale Prh, exprimée en dioptries prismatiques (D).

Observons tout d'abord, en nous reportant à la figure 2, l'état de la technique en la matière. Le diagramme de la figure 2 représente l'évolution des valeurs de puissance prismatique horizontale le long de la méridienne principale de progression d'une lentille ophtalmique correctrice à addition progressive de puissance connue. La lentille prise en exemple appartient à la famille de lentilles commercialisée par la demanderesse sous la marque Varilux Comfort Orma et possède une puissance sphérique nominale de -4 dioptries et une addition de puissance sphérique de 2 dioptries. L'astigmatisme nominal est nul. Le point de référence L de la zone de vision de loin VL est situé à une ordonnée Y=+8 mm ; le point de référence P de la zone de vision de près VP et sa projection P' sur l'axe Y sont situé à une ordonnée Y=-14 mm. Cette lentille est exclusivement dédiée à la correction de la presbytie sans tenir compte d'un éventuel problème d'hétérophorie et n'est en aucune manière proposée pour la correction ou le traitement de la myopie.

On constate certes avec cet exemple une évolution du prisme horizontal Prh le long de la méridienne principale de progression MM'. Mais celui-ci ne varie que faiblement : de 0, 8 dioptries prismatiques environ entre le point de référence L de la zone de vision de loin, où il est nul, et le point de référence P de la zone de vision de près VP, où il vaut 0, 8 dioptries prismatiques environ. Cette variation de prisme ne constitue pas à proprement parler une véritable addition de prisme ; elle est en réalité due aux effets prismatiques induits par la puissance du verre qui augmente jusqu'au point P et est trop faible pour produire un quelconque effet sur la convergence en vision de près du porteur et ne saurait, partant, produire un quelconque effet combiné sur sa myopie ou son hétérophorie.

Surtout, si l'on observe l'évolution du prisme horizontal le long de la verticale y, comme proposé figure 3, on constate que celui-ci reste quasiment nul. Il ne varie en effet que très faiblement : de 0, 2 dioptries prismatiques environ entre le point de référence L de la zone de vision de loin, où il est nul, et le point de projection P' du point de référence P de la zone de vision de près VP, où il vaut 0, 2 dioptries prismatiques environ. Il n'y a donc aucune addition de prisme perceptible sur la verticale y, les normes tolérances (sur la prescription de prisme au point L, lorsque qu'une correction prismatique est prévue) étant habituellement de 0, 25 dioptries prismatiques.

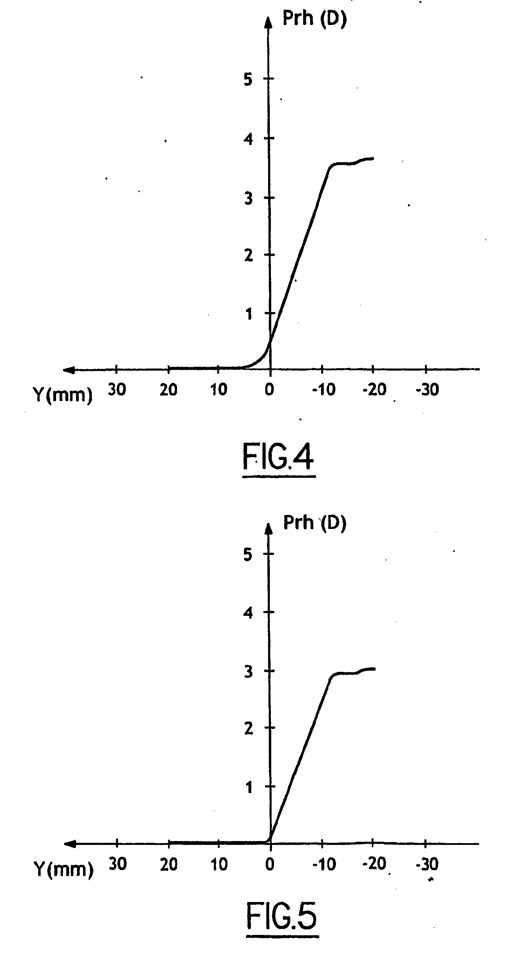

Comparons cette évolution de prisme à celle présentée sur la figure 4. Le diagramme de la figure 4 représente, de manière analogue à celui de la figure 2, l'évolution des valeurs de puissance sphérique et de prisme horizontal le long de la méridienne principale de progression d'une lentille ophtalmique correctrice à addition progressive de puissance conforme à l'invention. La lentille analysée ici possède la même puissance sphérique nominale de- 4 dioptries et la même addition de puissance sphérique de 2 dioptries que la lentille connue précédemment considérée en référence aux figures 2 et 3. L'astigmatisme nominal est nul. De même, le point de référence L de la zone de vision de loin VL est situé à une ordonnée Y=+8 mm ; le point de référence P de la zone de vision de près VP et sa projection P' sur l'axe Y sont situés à une ordonnée Y= -14 mm.

On observe ici que le prisme horizontal Prh varie beaucoup plus fortement. Entre le point de référence L de la zone de vision de loin VL où il est nul et le point de référence P de la zone de vision de près VP où il est de Prh(P) = 3, 5 dioptries prismatiques, le prisme varie de 3, 5 dioptries prismatiques. Cette valeur est donc 4, 4 fois plus importante que celle observée pour la lentille connue de la figure 2. La variation de prisme, bien que prononcée, est en outre progressive, c'est-à-dire continue au moins au premier degré. Il est même préférable, pour la douceur optique de la lentille vis-à-vis du porteur, que la fonction de variation du prisme horizontal le long de la méridienne soit continue au second ordre.

Cette progression de prisme horizontal sur la méridienne résulte d'une addition progressive de prisme horizontal introduite sur la verticale passant par le point L, c'est-à-dire sur l'axe y des ordonnées. A la figure 5, on peut observer cette variation de prisme horizontal le long de la verticale y. Il s'agit bien ici d'une addition volontaire de prisme horizontal, car, le long de cette verticale y, les effets prismatiques horizontaux sont négligeables.

On définit ainsi une addition de puissance prismatique horizontale, ou plus simplement addition de prisme horizontal, notée APrh, comme étant la différence entre d'une part la puissance de réfringence prismatique horizontale Prh(L) au point de référence L de la zone de vision de loin et d'autre part la puissance de réfringence prismatique horizontale Prh(P') au point P' de projection du point de référence P de la zone de vision de près VP sur la verticale y passant par le point de référence L de la zone de vision de loin. D'où la formule :

$$\Delta Prh = Prh(L) - Prh(P').$$

Dans l'exemple proposé :

Prh(L) = 0 dioptrie prismatique
Prh(P') = 3 dioptries prismatiques
donc $\Delta Prh$ = 3 dioptries prismatiques

Plus généralement, les calculs et les essais au porté ont permis de définir, en fonction de l'addition de puissance sphérique $\Delta Pu$, les bornes supérieure $\Delta Prh_{sup}$ et inférieure $\Delta Prh_{inf}$, en valeur absolue, de l'addition de prisme horizontal. Ces bornes sont définies par les formules suivantes :

$$\Delta Prh_{inf1} < |\Delta Prh| < \Delta Prh_{sup1}$$

avec $\Delta Prh_{sup1}$ = 5 dioptries prismatiques
et $\Delta Prh_{inf1}$ = 2 dioptries prismatiques

Une représentation graphique de ces fonctions est donnée par le diagramme de la figure 4.

Des bornes plus restrictives et avantageuses de l'addition de prisme horizontal ont également pu être définies par les formules suivantes :

$$\Delta Prh_{inf2} < |\Delta Prh| < \Delta Prh_{sup2}$$

avec $\Delta Prh_{sup2}$ = 3, 5 dioptries prismatiques
et $\Delta Prh_{inf2}$ = 2, 5 dioptries prismatiques

Normalement, hors cas particulier de correction prismatique prescrite (par exemple de strabisme), le porteur ne nécessite aucune correction de prisme sur l'ensemble du verre, si bien que le prisme horizontal Prh (L) au point de référence L de la zone de vision de loin VL doit rester faible, voire nul. Il importe en effet de conserver une absence ou quasi-absence de prisme horizontal en vision de loin, afin d'éviter l'adaptation permanente du sujet au prisme. C'est pourquoi, selon l'invention, la puissance prismatique n'est pas uniformément renforcée, mais suit une progression sensible de prisme, depuis la zone de vision de loin où le prisme horizontal reste faible, jusqu'à la zone de vision de près où il atteint une valeur prédéterminée, en fonction éventuellement des paramètres physiologiques du sujet. Pour chiffrer, on peut considérer qu'il est préférable que le prisme horizontal reste inférieur à 1 dioptrie prismatique, et de préférence à 0, 5 dioptrie prismatique, en valeur absolue. D'où la formule suivante :

$$|Prh(L)| < 1 \text{ dioptrie prismatique}$$

ou, avantageusement,

$$|Prh(L)| < 0,5 \text{ dioptrie prismatique}$$

Par ailleurs, pour une coopération efficiente avec ces valeurs de prisme horizontal et d'addition de prisme horizontal, il est préférable de prévoir que la puissance nominale soit comprise entre +0.75 et -10 dioptries.

Selon l'invention, il est préconisé d'utiliser une lentille répondant aux caractéristiques optiques définies ci-dessus pour la fabrication d'un équipement visuel, tel que des lunettes de vue, pour myopes et plus particulièrement encore pour enfants myopes.

La lentille décrite ci-dessus peut être appliquée de différentes manières, soit à des sujets presbytes, soit à des sujets myopes ou emmétropes.

Pour son application aux sujets myopes ou emmétropes, la lentille, présentant une ou plusieurs des caractéristiques optiques définies ci-dessus, peut être utilisée pour la fabrication d'un équipement visuel- typiquement une paire de lunettes- pour myopes ou emmétropes, et plus particulièrement encore pour enfants myopes.

Plus généralement, s'agissant des amétropies, et en particulier de la myopie, on peut envisager de les corriger ou de prévenir leur apparition ou leur aggravation par le port d'un équipement visuel tel qu'une paire de lunettes, comportant au moins une lentille ophtalmique analogue à celle précédemment décrite, c'est-à-dire présentant une addition de prisme sur la verticale y, telle que définie précédemment. On peut toutefois envisager dans ce cas des valeurs d'addition de prisme horizontal inférieures à 2 dioptries prismatiques, notamment pour les faibles myopies, les faibles hétérophories ou les jeunes enfants ; mais en dessous de 0, 5 dioptrie on peut considérer que l'effet du prisme sera insensible et donc dépourvu d'effet.

Bien entendu, la lentille utilisée pourra avantageusement reprendre une ou plusieurs des caractéristiques optiques précédemment définies.

La correction ou prévention ainsi obtenue trouvera un terrain d'application privilégié dans la population spécifique des enfants myopes.

L'orientation du prisme ajouté, résultant de l'addition de prisme horizontal, dépend du porteur et plus précisément de son état d'hétérophorie. Lorsque le sujet myope à équiper présente une exophorie en vision de près, le prisme ajouté est à base nasale, ce qui signifie que son effet est de décaler les images perçues par le porteur vers l'extérieur, c'est-à-dire vers la gauche pour l'oeil gauche et vers la droite pour l'oeil droit. Inversement, lorsque le sujet myope à équiper présente une esophorie en vision de près, le prisme ajouté est à base temporale, ce qui signifie que son effet est de décaler les images perçues par le porteur vers l'intérieur, c'est-à-dire vers la droite pour l'oeil gauche et vers la gauche pour l'oeil droit.

Pour son application à la presbytie, la présente invention propose de réduire l'inconfort d'hétérophorie et d'augmenter l'acceptabilité des verres progressifs des porteurs presbytes par l'adjonction d'une progression de puissance prismatique horizontale significative. A cet effet, on pourra prévoir la correction et/ou l'entraînement visuel du sujet presbyte par le port d'un équipement visuel comportant au moins une lentille ophtalmique présentant une ou plusieurs des caractéristiques optiques définies ci-dessus.

L'orientation du prisme ajouté, résultant de l'addition de prisme horizontal, dépend du porteur et plus précisément de son état d'hétérophorie en vision de près. Elle dépend également de la manière dont on souhaite prendre en charge la presbytie du sujet considéré.

La prise en charge peut être à but palliatif : on souhaite dans ce cas compenser l'hétérophorie. Si le porteur presbyte présente une exophorie en vision de près, le prisme ajouté est à base nasale. Inversement, si le porteur presbyte présente une esophorie en vision de près, le prisme ajouté est à base temporale.

La prise en charge peut au contraire être à but "curatif" : on souhaite dans ce cas forcer le porteur à pratiquer un entraînement visuel dans le but de réduire son hétérophorie. Si le porteur presbyte présente une exophorie en vision de près, le prisme ajouté est à base temporale. Inversement, si le porteur presbyte présente une esophorie en vision de près, le prisme ajouté est à base nasale.

**Revendications**

1.  Lentille ophtalmique à addition progressive de puissance sphérique, possédant une zone de vision de loin (VL), une zone de vision de près (VP) et une zone de vision intermédiaire (VI) située entre les deux précédentes, ces trois zones étant traversées par une ligne brisée (MM') le long de laquelle la puissance de réfringence sphérique (Pu) de la lentille varie progressivement, ladite lentille ayant un pouvoir de correction optique définit notamment par :

    - une addition de puissance sphérique (ΔPu) égale à la variation de puissance de réfringence sphérique entre un point de référence (L) de la zone de vision de loin et un point de référence (P) de la zone de vision de près (VP), ces deux points (P, L) étant situés sur la ligne brisée (MM'),
    - une puissance sphérique nominale (Pn) égale à la puissance de réfringence sphérique audit point de référence (L) de la zone de vision de loin (VL), et

- un astigmatisme nominal (An) égal à la puissance de réfringence cylindrique audit point de référence (L) de la zone de vision de loin (VL), inférieur à 1 dioptrie,

**caractérisée en ce qu'**elle présente une puissance de réfringence prismatique horizontale (Prh) qui varie progressivement le long de la ligne brisée (MM') avec une addition de puissance prismatique horizontale (ΔPrh) supérieure à 2 dioptries prismatiques en valeur absolue, cette addition de puissance prismatique horizontale (ΔPrh) étant définie par la différence entre la puissance de réfringence prismatique horizontale (Prh(L)) au point de référence (L) de la zone de vision de loin et la puissance de réfringence prismatique horizontale (Prh(P')) au point (P') de projection du point de référence (P) de la zone de vision de près (VP) sur la verticale passant par le point de référence (L) de la zone de vision de loin.

2. Lentille selon la revendication 1, dans laquelle l'addition de puissance prismatique horizontale (ΔPrh) est inférieure à 5 dioptries prismatiques en valeur absolue.

3. Lentille selon la revendication précédente, dans laquelle l'addition de puissance prismatique horizontale (ΔPrh) est comprise entre 2,5 et 3,5 dioptries prismatiques en valeur absolue.

4. Lentille selon l'une des revendications précédentes, dans laquelle la puissance prismatique horizontale (Prh/L) au point de référence (L) de la zone de vision de loin (VL) est inférieure à 1 dioptries prismatiques, et de préférence à 0,5 dioptries prismatiques, en valeur absolue, en l'absence de correction prismatique prescrite.

5. Lentille selon l'une des revendications précédentes, dont la puissance nominale (Pn) est comprise entre +0.75 dpt et -10 dpt.

6. Lentille selon l'une des revendications précédentes, dans laquelle la fonction de variation du prisme horizontal (Prh) le long de la ligne est continue au second ordre.

7. Utilisation d'une lentille selon l'une des revendications précédentes pour la fabrication d'un équipement visuel pour myopes ou emmétropes.

8. Utilisation d'une lentille selon la revendication précédente pour la fabrication d'un équipement visuel pour enfants myopes.

9. Utilisation d'une lentille selon l'une des revendications 1 à 6 pour la fabrication d'un équipement visuel pour un sujet presbyte.

**Patentansprüche**

1. Brillenglas mit progressiver sphärischer Stärkenaddition mit einer Zone für die Fernsicht (VL), einer Zone für die Nahsicht (VP) und einer Zone für mittlere Distanzen (VI), die sich zwischen den beiden vorausgehenden befindet, wobei diese drei Zonen von einer gebrochenen Linie (MM') durchquert werden, entlang der die sphärische Brechkraft (Pu) des Glases stufenweise variiert, wobei das Brillenglas einen optischen Korrektionswert hat, der insbesondere definiert ist durch:

- eine sphärische Stärkenaddition (ΔPu), die der Variation der Stärke der sphärischen Brechkraft zwischen einem Referenzpunkt (L) im Fernsichtbereich und einem Referenzpunkt (P) im Nahsichtbereich (VP) entspricht, wobei sich diese beiden Punkte (P, L) auf der gebrochenen Linie (MM') befinden,
- eine nominale sphärische Stärke (Pn), die am Referenzpunkt (L) der Zone für die Fernsicht (VL) der sphärischen Brechkraft entspricht, und
- einen nominalen Astigmatismus (An), der am Referenzpunkt (L) der Zone für die Fernsicht (VL) der zylindrischen Brechkraft entspricht und unter 1 Dioptrie liegt,

**dadurch gekennzeichnet, dass** es eine horizontale prismatische Brechkraft (Prh) aufweist, die entlang der gebrochenen Linie (MM') mit einer horizontalen prismatischen Stärkenaddition (ΔPrh) von über 2 prismatischen Dioptrien im Absolutwert progressiv variiert, wobei diese horizontale prismatische Stärkenaddition (ΔPrh) durch die Differenz zwischen der horizontalen prismatischen Brechkraft (Prh(L)) am Referenzpunkt (L) der Zone für die Fernsicht und der horizontalen prismatischen Brechkraft (Prh(P')) am Projektionspunkt (P') des Referenzpunktes (P) der Zone für die Nahsicht (VP) in der Senkrechten definiert ist, die durch den Referenzpunkt (L) der Zone für die Fernsicht verläuft.

2. Brillenglas nach Anspruch 1, bei dem die horizontale prismatische Stärkenaddition (ΔPrh) unter 5 prismatischen Dioptrien im Absolutwert liegt.

3. Brillenglas nach dem vorausgehenden Anspruch, bei dem die horizontale prismatische Stärkenaddition (ΔPrh) zwischen 2,5 und 3,5 prismatischen Dioptrien im Absolutwert liegt.

4. Brillenglas nach einem der vorausgehenden Ansprüche, bei dem die horizontale prismatische Stärke (Prh/L) am Referenzpunkt (L) der Zone für die Fernsicht (VL) unter 1 prismatischer Dioptrie beträgt, und vorzugsweise unter 0,5 prismatischen Dioptrien im Absolutwert beträgt, wenn keine prismatische Korrektur verordnet ist.

5.  Brillenglas nach einem der vorausgehenden Ansprüche, dessen nominale Stärke (Pn) zwischen + 0,75 dpt und -10 dpt liegt.

6.  Brillenglas nach einem der vorausgehenden Ansprüche, bei dem die Variationsfunktion des horizontalen Prismas (Prh) entlang der Linie in zweiter Ordnung kontinuierlich ist.

7.  Anwendung eines Brillenglases nach einem der vorausgehenden Ansprüche für die Fertigung einer visuellen Ausstattung für Kurz- und Normalsichtige.

8.  Anwendung eines Brillenglases nach dem vorausgehenden Anspruch für die Fertigung einer visuellen Ausstattung für kurzsichtige Kinder.

9.  Anwendung eines Brillenglases nach einem der Ansprüche 1 bis 6 für die Fertigung einer visuellen Ausstattung für eine alterssichtige Person.

**Claims**

1.  An ophthalmic lens with progressive addition of spherical power, the lens possessing a far vision zone (VL), a near vision zone (VP), and an intermediate vision zone (VI) situated between the two preceding zones, these three zones being crossed by a broken line (MM') along which the spherical refractive power (Pu) of the lens varies progressively, said lens having optical corrective power defined in particular by :

    - spherical power addition (ΔPu) equal to the variation in spherical refractive power between a reference point (L) of the far vision zone and a reference point (P) of the near vision zone (VP), these two points (P, L) being situated on the broken line (MM') ;
    - nominal spherical power (Pn) equal to the spherical refractive power at said reference point (L) of the far vision zone (VL) ; and
    - nominal astigmatism (An) equal to the cylindrical refractive power at said reference point (L) of the far vision zone (VL) of less than 1 diopter;

    the lens being **characterized in that** it presents horizontal prismatic refractive power (Prh) that varies progressively along the broken line (MM') with an addition of horizontal prismatic power (ΔPrh) greater than 2 prismatic diopters in absolute value, said addition of horizontal prismatic power (ΔPrh) being defined as the difference between the horizontal prismatic refractive power (Prh(L)) at the reference point (L) of the far vision zone and the horizontal prismatic refractive power (Prh(P')) at the projection point (P') of the reference point (P) of the near vision zone (VP) onto the vertical line passing through the reference point (L) of the far vision zone.

2.  A lens according to claim 1, in which the addition of horizontal prismatic power (ΔPrh) is less than 5 prismatic diopters in absolute value.

3.  A lens according to the preceding claim, in which the addition of horizontal prismatic power (ΔPrh) lies in the range 2.5 to 3.5 prismatic diopters in absolute value.

4.  A lens according to any preceding claim, in which the horizontal prismatic power (Prh/L) at the reference point (L) of the far vision zone (VL) is less than 1 prismatic diopter, and preferably less than 0.5 prismatic diopters, in absolute value, in the absence of any prescribed prismatic correction.

5.  A lens according to any preceding claim, in which the nominal power (Pn) lies in the range +0.75 diopters to -10 diopters.

6.  A lens according to any preceding claim, in which the function with which horizontal prism (Prh) varies along the line is continuous to the second order.

7.  The use of a lens according to any preceding claim for fabricating a visual equipment for subjects with myopia or emmetropia.

8.  The use of a lens according to the preceding claim for fabricating a visual equipment for children with myopia.

9.  The use of a lens according to anyone of claims 1 to 6 for fabricating a visual equipment for a subject with presbyopia.

## FIG.1

**FIG.2**

**FIG.3**

FIG.4

FIG.5

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2683643

- US 5270745 A

**Littérature non-brevet citée dans la description**

- **MICHEL MILLODOT.** Le Nouveau Dictionnaire de la Vision. Mediacom Vision, 1997, 72
- Theoritical aspects of concentric varifocal lenses. **W.N. CHARMAN.** Ophtal. Physiol. Opt. Pergamon Press, 1982, vol. 2, 75-86

- Paraxial Optics. **W.F. LONG.** Visual Optics and Instrumentation. Macmillan Press, 1991, 418-419